# EUROPÄISCHE PATENTSCHRIFT

(11) **EP 1 184 250 B1**
(45) Veröffentlichungstag und Bekanntmachung des Hinweises auf die Patenterteilung: **14.04.2004**
(21) Anmeldenummer: 01118182.3
(22) Anmeldetag: 27.07.2001
(51) Int. Cl.: B61F 5/24, B61F 5/14, B60G 21/06

(54) **Hydraulische Schwingungsdämpferanordnung**
Hydraulic vibration absorbing system
Système hydraulique d'absorption de vibrations

(30) Priorität: 01.09.2000 DE 10043053
(43) Veröffentlichungstag der Anmeldung: 06.03.2002
(73) Patentinhaber: ZF Sachs AG, 97424 Schweinfurt (DE)
(72) Erfinder: Clemens, Diemar, 53783 Eitorf (DE); Wolff, Michael, 53721 Siegburg (DE); Balg, Thomas, 53567 Buchholz (DE); Weber, Johannes, 53809 Ruppichteroth (DE)

(56) Entgegenhaltungen:
- EP-A- 0 201 425
- DE-A- 2 315 427
- DE-A- 19 714 745

## Beschreibung

Die Erfindung bezieht sich auf eine hydraulische Schwingungsdämpferanordnung für ein Drehgestell eines Schienenfahrzeuges mit mindestens zwei parallel angeordneten Schwingungsdämpfern, wobei jeder Schwingungsdämpfer einen mit einem statisch vorgespannten Dämpfungsmittel gefüllten Arbeitszylinder und einen an einer Kolbenstange befestigten Arbeitskolben aufweist, wobei die Arbeitsräume mindestens eines Schwingungsdämpfers auf der einen Seite der Längsachse des Drehgestelles hydraulisch mit den Arbeitsräumen mindestens eines weiteren Schwingungsdämpfers auf der anderen Seite der Längsachse des Drehgestelles verbunden sind, dabei ist die hydraulische Verbindung des Schwingungsdämpfers derart geschaltet, dass bei Parallelschwingungen im Drehgestell ein druckloser Austausch von Dämpfungsmittel zwischen den Arbeitsräumen erfolgt und dass bei Drehschwingungen zur Erzielung einer Dämpfung jeweils die komprimierenden und jeweils die expandierenden Arbeitsräume miteinander verbunden sind.

Es sind bereits hydraulische Schwingungsdämpferanordnungen bekannt (DE 197 14 745 A1), mit mindestens zwei parallel angeordneten Schwingungsdämpfern, insbesondere für ein Drehgestell eines Schienenfahrzeuges, wobei die Arbeitsräume mindestens eines Schwingungsdämpfers auf der einen Seite der Längsachse des Drehgestelles hydraulisch mit den Arbeitsräumen mindestens eines weiteren Schwingungsdämpfers auf der anderen Seite der Längsachse des Drehgestelles verbunden sind und derart geschaltet sind, dass bei Parallelschwingungen im Drehgestell ein druckloser Austausch von Dämpfungsmittel zwischen den Arbeitsräumen erfolgt und dass bei Drehschwingungen zur Erzielung einer Dämpfung jeweils die komprimierenden und jeweils die expandierenden Arbeitsräume miteinander verbunden sind. Dies bedeutet, dass bei einer parallelen Bewegung des Drehgestelles im Verhältnis zum Wagenkasten in den Schwingungsdämpfern keine Dämpfungskraft aufgebaut wird, denn es erfolgt ein druckloser Austausch des Dämpfungsmittels zwischen den Arbeitsräumen. Bei Drehschwingungen dagegen, nämlich bei Bewegungen des Drehgestelles relativ zum Wagenkasten wird in den Schwingungsdämpfern ein Druckniveau aufgebaut, so dass eine Dämpfungskraft erzeugt wird. Ein derartiges System wird als längsentkoppeltes Schlingerdämpfersystem bezeichnet. Nachteilig ist hierbei jedoch, dass bei Beschädigung von hydraulischen Verbindungsleitungen und einem damit verbundenen Ölverlust in den Schwingungsdämpfern diese wirkungslos werden. Der Ausfall von derartigen Schlingerdämpfern bedeutet ein hohes Sicherheitsrisiko im Fahrbetrieb des Schienenfahrzeuges.

Aufgabe der Erfindung ist es, eine hydraulische Schwingungsdämpferanordnung zu schaffen, bei der ein Risiko in Bezug auf die hydraulischen Verbindungen minimiert oder sogar verhindert werden kann.

Diese Aufgabe wird durch die Merkmale des Anspruchs 1 gelöst, wobei erfindungsgemäß vorgesehen ist, dass mindestens eine hydraulische Verbindung mit einer Ventileinheit versehen ist, die bei Druckabfall in mindestens einem der Schwingungsdämpfer die hydraulische Verbindung schließt.

Vorteilhaft ist bei dieser Ausbildung, dass bei einem Problem in den hydraulischen Verbindungsleitungen die einzelnen Schwingungsdämpfer gegeneinander abgesperrt werden, damit können diese Schwingungsdämpfer als Dämpfer selbst weiter betrieben werden und dienen als stabilisierendes Element zwischen dem Drehgestell und dem Wagenkasten eines Schienenfahrzeuges, ohne dass dabei die Fahrsicherheit vermindert wird. Es ist lediglich in diesem Fall die durch die Längsentkopplung bewirkte Komfortverbesserung aufgehoben. Die Verbindung der Schwingungsdämpfer dient insgesamt der Verbesserung des Fahrkomforts, z.B. bei Reisezugwagen.

Nach einer weiteren Ausgestaltung ist vorgesehen, dass mindestens ein Teil der hydraulischen Verbindung als flexible Leitung ausgebildet ist. Hierbei ist von Vorteil, dass die Schwingungsdämpfer gegenüber den hydraulischen Verbindungsleitungen relativ zueinander beweglich sind, denn eine bestimmte Bewegungsfreiheit ist bei dieser Konstruktion zu gewährleisten.

Nach einem wesentlichen Merkmal ist vorgesehen, dass als Ventileinheit 2/2-Wege-Ventile vorgesehen sind.

Ein weiteres Merkmal sieht vor, dass die hydraulische Verbindung mit dem Schwingungsdämpfer über eine Hydraulikkupplung verbunden ist. Durch die Verwendung von Hydrautikkupplungen ist ein verlustfreies Anschließen der flexiblen Leitungen an der jeweiligen Ventileinheit problemlos möglich.

Eine günstige Ausführungsform sieht vor, dass mindestens ein Schwingungsdämpfer und/oder mindestens eine hydraulische Verbindung einen Druckschalter und/oder Drucksensor aufweist. Hierbei ist von Vorteil, dass das gesamte Dämpfersystem mit einem statischen Druck vorgespannt werden kann, der auch in ungünstigen Fällen (Minustemperaturen) noch oberhalb der Schaltschwelle des Druckschalters liegt, so dass erst nach einem Druckabfall die Ventileinheiten beaufschlagt werden müssen.

Ein weiteres Merkmal sieht vor, dass die Ventileinheit elektrisch oder hydraulisch schaltbar ist. Hierbei ist von Vorteil, dass bei der Verwendung von elektrisch betätigten Ventilen die Wirkungsweise der Fail-Safe-Einrichtung darauf beruht, dass der statische Vorspanndruck bei Leckagen im Schwingungsdämpfer, also auch bei Beschädigung der Verbindungsleitungen abfällt. Bei Unterschreiten der Schaltschwelle des Druckschalters wird die Spannungsversorgung der Ventileinheit unterbrochen und damit gleichzeitig die hydraulischen Verbindungen abgesperrt. Bei der Verwendung als hydraulisch betätigte Ventile werden die Ventileinheiten durch eine statische Vorspannung geöffnet. Bei Unterschreitung des erforderlichen Öffnungsdruckes in Folge von Leckagen im Schwingungsdämpfer oder in den hydraulischen Verbindungen werden die hydraulischen Verbindungen selbständig abgesperrt.

Nach einer weiteren Ausgestaltung ist vorgesehen, dass nach Unterschreitung eines Mindestdruckes die Ventileinheit die hydraulische Verbindung schließt.

Des weiteren ist vorgesehen, dass bei einer elektrisch geschalteten Ventileinheit entsprechende Druckschalter in Sensierungsmitteln des Drehgestells integriert sind oder dass bei einer hydraulisch geschalteten Ventileinheit weitere Druckschalter und/oder Drucksensoren vorgesehen sind.

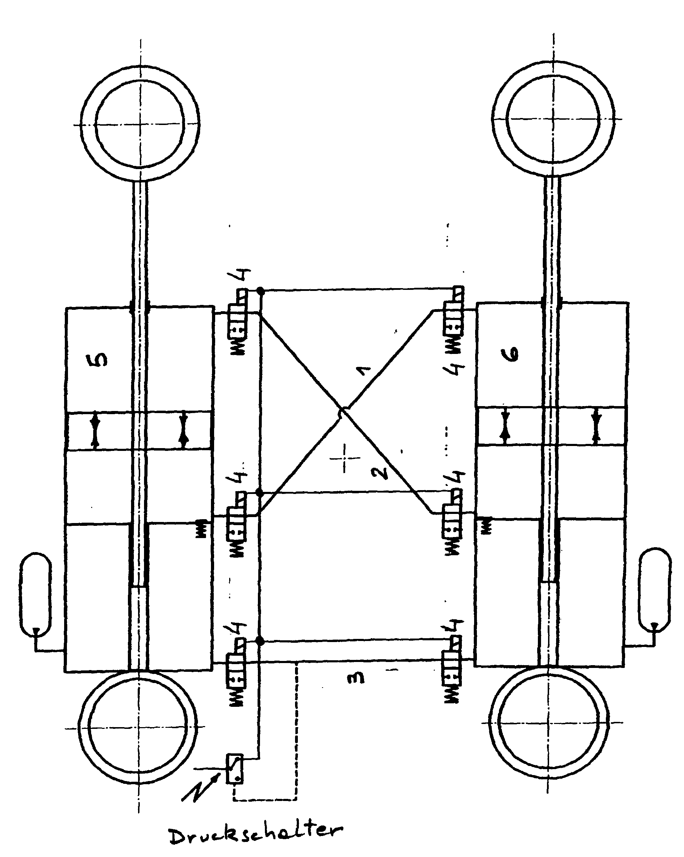

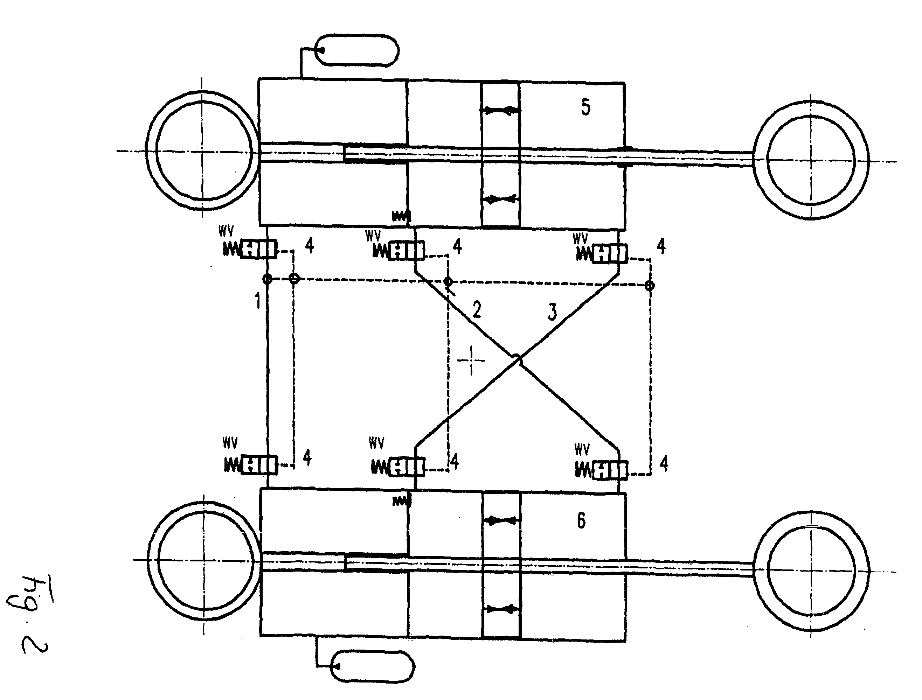

Bevorzugte Ausführungsbeispiele der Erfindung sind in den Figuren 1 und 2 schematisch dargestellt.

Aus der Figur 1 ist schematisch eine hydraulische Schwingungsdämpferanordnung zu entnehmen, bei der im wesentlichen die Schwingungsdämpfer 5 und 6 über hydraulische Verbindungen 1, 2 und 3 miteinander verbunden sind. Jedem Schwingungsdämpfer 5 oder 6 und jeder hydraulischen Verbindung 1, 2 und 3 ist jeweils eine Ventileinheit 4 zugeordnet.

Die Schwingungsdämpfer im einzelnen bestehen aus einem Arbeitszylinder, einem Dämpfungskolben, der mit Dämpfungsventilen bestückt ist und einer Kolbenstange, die den Dämpfungskolben trägt, dabei ist stirnseitig jeweils ein Ausgleichsraum vorgesehen. Der Ausgleichsraum ist mit dem Arbeitszylinder Ober ein Rückschlagventil verbunden. Die Dämpfungsventile können wahlweise im Dämpfungskolben oder in der Kolbenstangenführung untergebracht sein. Die Arbeitsräume des jeweiligen Schwingungsdämpfers 5 oder 6 sind kreuzweise durch die hydraulischen Verbindungen 1 und 2 miteinander verbunden. Die Ausgleichsräume des jeweiligen Schwingungsdämpfers werden über die hydraulische Verbindung 3 verbunden.

Bei der elektrischen Ansteuerung der Ventileinheiten 4 ist ein Druckschalter gegebenenfalls entsprechende Drucksensoren vorgesehen.

Aus der Figur 2 dagegen ist ein System zu entnehmen, welches im Prinzip dem in Figur 1 dargestellten entspricht, mit dem Unterschied, dass die Ventileinheiten 4 hydraulisch angesteuert werden, das bedeutet oberhalb eines bestimmten Systemdruckes werden die Ventile der jeweiligen Ventileinheit geöffnet, bei Abfall des Druckes in der Verbindungsfeitung oder im Schwingungsdämpfer erfolgt ein automatisches Schließen der jeweiligen Ventileinheit. Die Messung des statischen Druckes lässt sich dabei im Ausgleichsraum des Systems in einer Drehgestellsensierung und/oder einer Drehgestellüberwachung integrieren.

### Bezugszeichenliste

- 1 -: hydraulische Verbindung
- 2 -: hydraulische Verbindung
- 3 -: hydraulische Verbindung
- 4 -: Ventileinheit
- 5 -: Schwingungsdämpfer
- 6 -: Schwingungsdämpfer

## Patentansprüche

1. Hydraulische Schwingungsdämpferanordnung für ein Drehgestell eines Schienenfahrzeuges mit mindestens zwei parallel angeordneten Schwingungsdämpfern (5,6), wobei jeder Schwingungsdämpfer (5, 6) einen mit einem statisch vorgespannten Dämpfungsmittel gefüllten Arbeitszylinder und einen an einer Kolbenstange befestigten Arbeitskolben aufweist, wobei die Arbeitsräume mindestens eines Schwingungsdämpfers (5) auf der einen Seite der Längsachse des Drehgestelles hydraulisch mit den Arbeitsräumen mindestens eines weiteren Schwingungsdämpfers (6) auf der anderen Seite der Längsachse des Drehgestelles verbunden sind, dabei ist die hydraulische Verbindung (1, 2, 3) des Schwingungsdämpfers (5, 6) derart geschaltet, dass bei Parallelschwingungen im Drehgestell ein druckloser Austausch von Dämpfungsmittel zwischen den Arbeitsräumen erfolgt und dass bei Drehschwingungen zur Erzielung einer Dämpfung jeweils die komprimierenden und jeweils die expandierenden Arbeitsräume miteinander verbunden sind,
**dadurch gekennzeichnet,**
**dass** mindestens eine hydraulische Verbindung (1, 2, 3) mit einer Ventileinheit (4) versehen ist, die bei Druckabfall in mindestens einem der Schwingungsdämpfer (5, 6) die hydraulische Verbindung (1, 2, 3) schließt.

2. Schwingungsdämpferanordnung nach Anspruch 1,
**dadurch gekennzeichnet,**
**dass** mindestens ein Teil der hydraulischen Verbindung (1, 2, 3) als flexible Leitung ausgebildet ist.

3. Schwingungsdämpferanordnung nach Anspruch 1,
**dadurch gekennzeichnet,**
**dass** als Ventileinheit (4) 2/2-Wege-Ventile vorgesehen sind.

4. Schwingungsdämpferanordnung nach Anspruch 1,
**dadurch gekennzeichnet,**
**dass** die hydraulische Verbindung (1, 2, 3) mit dem Schwingungsdämpfer (5, 6) über eine Hydraulikkupplung verbunden ist.

5. Schwingungsdämpferanordnung nach Anspruch 1,
**dadurch gekennzeichnet,**
**dass** mindestens ein Schwingungsdämpfer (5, 6) und/oder mindestens die hydraulische Verbindung (3) einen Druckschalter und/oder Drucksensor aufweist.

6. Schwingungsdämpferanordnung nach Anspruch 1,
**dadurch gekennzeichnet,**
**dass** die Ventileinheit (4) elektrisch oder hydraulisch schaltbar ist.

7. Schwingungsdämpferanordnung nach Anspruch 6,
**dadurch gekennzeichnet,**
**dass** nach Unterschreitung eines Mindestdruckes die Ventileinheit (4) die hydraulische Verbindung (1, 2, 3) schließt.

8. Schwingungsdämpferanordnung nach Anspruch 6,
**dadurch gekennzeichnet,**
**dass** bei einer elektrisch geschalteten Ventileinheit (4) entsprechende Druckschalter in Sensierungsmitteln des Drehgestells integrierbar sind.

9. Schwingungsdämpferanordnung nach Anspruch 6
**dadurch gekennzeichnet,**
**dass** bei einer hydraulisch geschalteten Ventileinheit (4) weitere Druckschalter und/oder Drucksensoren vorgesehen sind.

## Claims

1. Hydraulic vibration damper arrangement for a bogie of a rail vehicle having at least two vibration dampers (5, 6) which are arranged in parallel, each vibration damper (5, 6) having a working cylinder which is filled with a statically preloaded damping agent and a working piston which is attached to a piston rod, the working spaces of at least one vibration damper (5) on the one side of the longitudinal axis of the bogie being hydraulically connected to the working spaces of at least one further vibration damper (6) on the other side of the longitudinal axis of the bogie, the hydraulic connection (1, 2, 3) of the vibration damper (5, 6) being switched here in such a way that when there are parallel vibrations in the bogie a pressureless exchange of damping agent takes place between the working spaces, and that when there are torsional vibrations the respective compressing working spaces and the respective expanding working spaces are connected to one another in order to achieve damping, **characterized in that** at least one hydraulic connection (1, 2, 3) is provided with a valve unit (4) which closes the hydraulic connection (1, 2, 3) if the pressure drops in at least one of the vibration dampers (5, 6).

2. Vibration damper arrangement according to Claim 1, **characterized in that** at least one part of the hydraulic connection (1, 2, 3) is configured as a flexible line.

3. Vibration damper arrangement according to Claim 1, **characterized in that** 2/2-way valves are provided as the valve unit (4).

4. Vibration damper arrangement according to Claim 1, **characterized in that** the hydraulic connection (1, 2, 3) is connected to the vibration damper (5, 6) via a hydraulic coupling.

5. Vibration damper arrangement according to Claim 1, **characterized in that** at least one vibration damper (5, 6) and/or at least the hydraulic connection (3) have/has a pressure switch and/or pressure sensor.

6. Vibration damper arrangement according to Claim 1, **characterized in that** the valve unit (4) can be switched electrically or hydraulically.

7. Vibration damper arrangement according to Claim 6, **characterized in that**, after the pressure has dropped below a minimum pressure, the valve unit (4) closes the hydraulic connection (1, 2, 3).

8. Vibration damper arrangement according to Claim 6, **characterized in that**, in an electrically switched valve unit (4), it is possible to integrate appropriate pressure switches in sensing means of the bogie.

9. Vibration damper arrangement according to Claim 6, **characterized in that**, in a hydraulically switched valve unit (4), further pressure switches and/or pressure sensors are provided.

## Revendications

1. Système hydraulique d'absorption de vibrations pour un bogie d'un véhicule ferroviaire avec au moins deux amortisseurs de vibrations (5, 6) disposés en parallèle, dans lequel chaque amortisseur de vibrations (5, 6) présente un cylindre de travail rempli d'un fluide d'amortissement précontraint statiquement et un piston de travail fixé sur une tige de piston, dans lequel les volumes de travail d'au moins un amortisseur de vibrations (5) sur un côté de l'axe longitudinal du bogie sont raccordés hydrauliquement aux volumes de travail d'au moins un autre amortisseur de vibrations (6) sur l'autre côté de l'axe longitudinal du bogie, le raccordement hydraulique (1, 2, 3) de l'amortisseur de vibrations (5, 6) étant réalisé de telle façon que, en cas de vibrations parallèles dans le bogie, il se produise un échange sans pression de fluide d'amortissement entre les volumes de travail et que, en cas de vibrations de rotation, les volumes de travail respectivement en compression et en dilatation soient reliés entre eux pour produire un amortissement, **caractérisé en ce qu'**au moins un raccordement hydraulique (1, 2, 3) est pourvu d'une unité de soupapes (4) qui, en cas de chute de pression dans au moins un des amortisseurs de vibrations (5, 6), ferme le raccordement hydraulique (1, 2, 3).

2. Système d'absorption de vibrations selon la revendication 1, **caractérisé en ce qu'**au moins une partie du raccordement hydraulique (1, 2, 3) est sous forme de conduite flexible.

3. Système d'absorption de vibrations selon la revendication 1, **caractérisé en ce qu'**il est prévu comme unité de soupapes (4) des soupapes à 2/2 voies.

4. Système d'absorption de vibrations selon la revendication 1, **caractérisé en ce que** le raccordement hydraulique (1, 2, 3) est raccordé à l'amortisseur de vibrations (5, 6) par un couplage hydraulique.

5. Système d'absorption de vibrations selon la revendication 1, **caractérisé en ce qu'**au moins un amortisseur de vibrations (5, 6) et/ou au moins le raccordement hydraulique (3) présente un interrupteur à pression et/ou un capteur de pression.

6. Système d'absorption de vibrations selon la revendication 1, **caractérisé en ce que** l'unité de soupapes (4) peut être commandée par voie électrique ou hydraulique.

7. Système d'absorption de vibrations selon la revendication 6, **caractérisé en ce que** l'unité de soupapes (4) ferme le raccordement hydraulique (1, 2, 3) en cas de baisse de la pression en dessous d'une pression minimale.

8. Système d'absorption de vibrations selon la revendication 6, **caractérisé en ce que**, avec une unité de soupapes (4) à commande électrique, des interrupteurs à pression correspondants peuvent être intégrés dans des moyens de détection du bogie.

9. Système d'absorption de vibrations selon la revendication 6, **caractérisé en ce que**, avec une unité de soupapes (4) à commande hydraulique, il est prévu d'autres interrupteurs à pression et/ou d'autres capteurs de pression.
